# EUROPEAN PATENT SPECIFICATION

(11) **EP 3 331 402 B1**
(45) Date of publication and mention of the grant of the patent: **27.02.2019**
(21) Application number: 16793865.3
(22) Date of filing: 08.11.2016
(51) Int. Cl.: A46B 15/00

(54) **TOOTH BRUSH INCLUDING MATERIAL FOR INHIBITION OF MOLD GROWTH**
ZAHNBÜRSTE MIT MATERIAL ZUR HEMMUNG DES SCHIMMELWACHSTUMS
BROSSE À DENTS COMPORTANT UN MATÉRIAU PERMETTANT D'EMPÊCHER LE DÉVELOPPEMENT DES MOISISSURES

(30) Priority: 09.11.2015 US 201562252836 P
(43) Date of publication of application: 13.06.2018
(73) Proprietor: Koninklijke Philips N.V., 5656 AE Eindhoven (NL)
(72) Inventor: VAN DER ZWAN, Eduard, Antonius, 5656 AE Eindhoven (NL)
(74) Representative: van Oudheusden-Perset, Laure E.
(86) International application number: PCT/EP2016/077009
(87) International publication number: WO 2017/081023

(56) References cited:
- WO-A1-2007/031515
- JACOBS J F ET AL: "Development of a bionanotechnological phosphate removal system with thermostable ferritin", BIOTECHNOLOGY AND BIOENGINEERING, vol. 105, no. 5, 1 April 2010 (2010-04-01) , pages 918-923, XP055161673, John Wiley & Sons ISSN: 0006-3592

## Description

### BACKGROUND

The following relates to the dental care arts, and related arts and more specifically concerns a device and a method for inhibiting mold growth on a toothbrush.

Microorganisms, such as mold survive on nutrients in their surroundings. Depending upon the ecosystem, one of these nutrients may be growth-limiting, meaning that the organism's ability to thrive is heavily dependent on there being an adequate supply of the nutrient. Nitrogen is often the limiting nutrient, although in some environments, phosphorus is a limiting nutrient.

Toothbrushes can be susceptible to mold growth due to the rich supply of nutrients in food that is brushed off the teeth, ingredients in many toothpastes, such as phosphates, and frequent presence of water. Toothbrushes, and especially power toothbrushes, may include crevices where molds can grow, such as in the gap between the brush head and the handle in powered toothbrushes. A seal in the gap is designed to exclude water from the brush vibration mechanism. However, the growth of mold on the seal may cause premature rupture of the seal and failure of the mechanism due to leakage of water. Prevention of mold growth could significantly limit seal breakage and eventual device failure.

WO2005110149 disclose a toothbrush leaching antibacterial material from the cleaning elements. Methods have been developed for removing the limiting nutrient to control biofouling in membrane water filtration plants. Use of ferritin (a globular, intracellular protein) in oxo-anion removal is described in Sevcenco, et al., "Phosphate and arsenate removal efficiency by thermostable ferritin enzyme from Pyrococcus furiosus using radioisotopes," Water Research 76:181-186 (2015), which describes radiographic characterization of oxo-anion binding properties of the thermostable enzyme ferritin from *Pyrococcus furiosus;* Jacobs, et al., "Development of a bionanotechnological phosphate removal system with thermostable ferritin," Biotechnol. Bioeng., 1:105(5):918-23 (2010), which describes bionanotechnological phosphate removal based on sorption of oxoanions by nanoscale ferric iron particles stabilized within thermostable ferritin from the hyperthermophilic archaeon *Pyrococcus furiosus* (PfFrt); and Vrouwenvelder, et al., "Phosphate limitation to control biofouling," Water Res., 44(11):3454-66 (2010), which describes phosphate limitation as a method to control biofouling of spiral wound reverse osmosis (RO) membranes; and in U.S. 20080223789, published September 18,2008, entitled MATERIAL AND A METHOD FOR REMOVING OXO-ANIONS AND METAL CATIONS FROM A LIQUID, by Hasan, et al.

However, these methods involve flow of the liquid to be treated through filtration media, which is generally not feasible in a cleaning a power toothbrush.

### BRIEF DESCRIPTION

In accordance with one aspect of the invention, a brush head for a toothbrush includes a housing which defines an interior cavity. A brush member is at a distal end of the housing. A receptacle including a filter member is at a proximal end of the housing. The receptacle holds a material that removes an essential nutrient for growth of mold from liquid when the liquid is in contact with the receptacle.

In accordance with another aspect of the invention, a toothbrush is provided which includes the brush head.

In accordance with another aspect of the invention, a method of using the brush head is provided.

In accordance with another aspect of the invention, a use of the brush head for cleaning teeth is provided.

### BRIEF DESCRIPTION OF THE DRAWINGS

The invention may take form in various components and arrangements of components, and in various process operations and arrangements of process operations. The drawings are only for the purpose of illustrating preferred embodiments and are not to be construed as limiting the invention.
FIGURE 1 shows a perspective view of a toothbrush in accordance with one aspect of the embodiment disclosed herein.
FIGURE 2 is a cross-sectional view of part of the toothbrush of FIGURE 1 in accordance with a first aspect of the exemplary embodiment.
FIGURE 3 is an exploded perspective view of the brush head and nutrient absorbing material receptacle.
FIGURE 4 is a plan view of a foraminous plate for the receptacle of FIGURE 3.
FIGURE 5 is a cross-sectional view of part of the toothbrush of FIGURE 1 in accordance with a second aspect of the exemplary embodiment.
FIGURE 6 is a cross-sectional view of part of the toothbrush of FIGURE 1 in accordance with a third aspect of the exemplary embodiment.
FIGURE 7 is a cross-sectional view of part of the toothbrush of FIGURE 1 in accordance with a fourth aspect of the exemplary embodiment.
FIGURE 8 shows an embodiment of a brush head in accordance with the fourth embodiment.
FIGURE 9 shows a particle of the nutrient-absorbing material.
FIGURE 10 is a flow chart illustrating a method of reducing mold growth, in accordance with embodiments disclosed herein.

### DETAILED DESCRIPTION

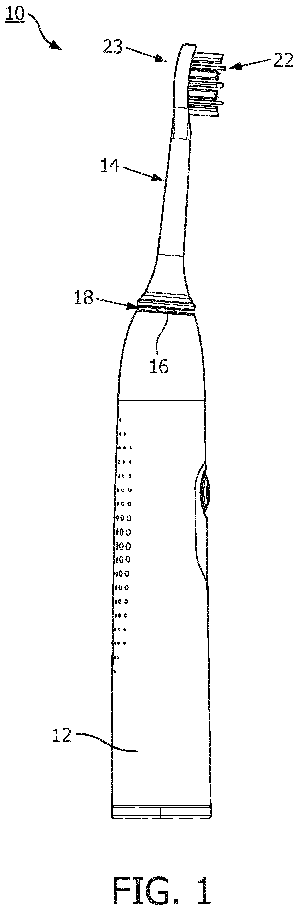

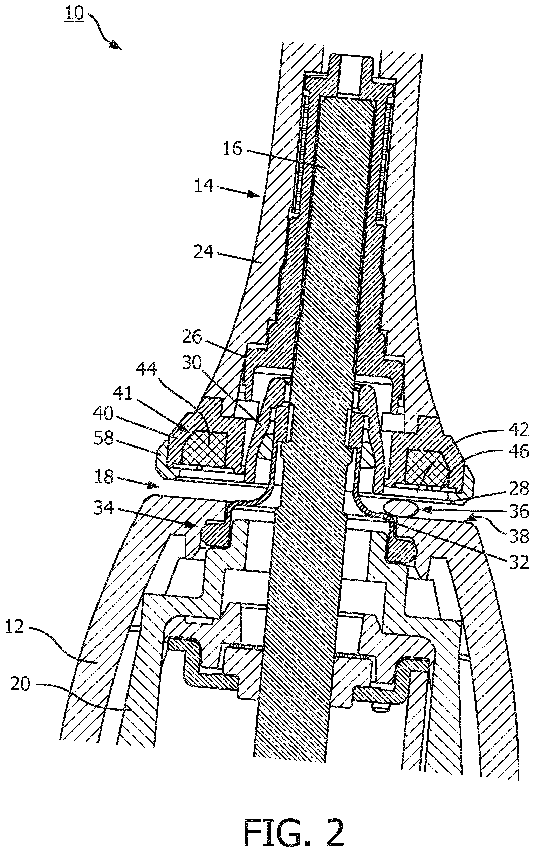

With reference to FIGURES 1 and 2, a power toothbrush **10** includes a handle **12** and a brush head **14,** which is removably mounted to the handle. A driveshaft **16,** best seen in FIGURE 2, extends from the handle **12** into the brush head. An annular crevice **18** is defined by a gap which spaces the handle **12** from the brush head **14.** The driveshaft **16** is driven rotationally or through a selected angle of oscillation by a drive mechanism **20** contained in the handle **12.** A brush member **22** is provided at a distal (upper) end **23** of the brush head for cleaning teeth.

The replaceable brush head **14** includes an outer housing **24** which defines an interior cavity **26** that extends into the brush head from a proximal (bottom) end **28** of the brush head. The driveshaft **16** extends into and securely mates with a coupling member **30,** which extends from the proximal end **28** of the brush head housing into the cavity **26.** An annular seal **32** is positioned around the drive shaft **16,** interior of the coupling member **30,** and extends across the crevice **18** into the handle **12,** where it is gripped by a cover member **34** of the handle. The seal **32** inhibits ingress of water from the crevice to the brush head and handle.

During teeth cleaning, a mixture **36** of water, food particles, and/or toothpaste may enter the crevice **18** and be deposited on the seal **32** and the adjacent ends **28, 38** of the brush head and handle, which together define the crevice **18.** As a result, microorganisms, such as mold, that are carried into the crevice, could flourish on the nutrient-rich medium created in the crevice **18,** metabolizing the nutrients and eventually leading to failure of the seal.

In the illustrated toothbrush, however, the proximal end **28** of the brush head housing **24** includes a receptacle **40,** which defines an annular trough **41.** The illustrated receptacle is annular and spaced radially outward of the drive shaft. The receptacle may be formed from the same material as the housing **24** and in some embodiments, may be integrally formed with the housing. In one embodiment, the receptacle **40** is formed of plastic. The receptacle **40** defines an opening **42** adjacent the proximal end of the housing, which is in fluid communication with the crevice **18.** The receptacle **40** holds a nutrient-capturing/absorbing material **44.** The material **44** tends to limit the availability of at least one essential nutrient in the crevice surrounding the seal of the brush handle. This inhibits or prevents mold growth and thus inhibits or prevents seal breakage, e.g., for at least the normal period of use of the replaceable brush head.

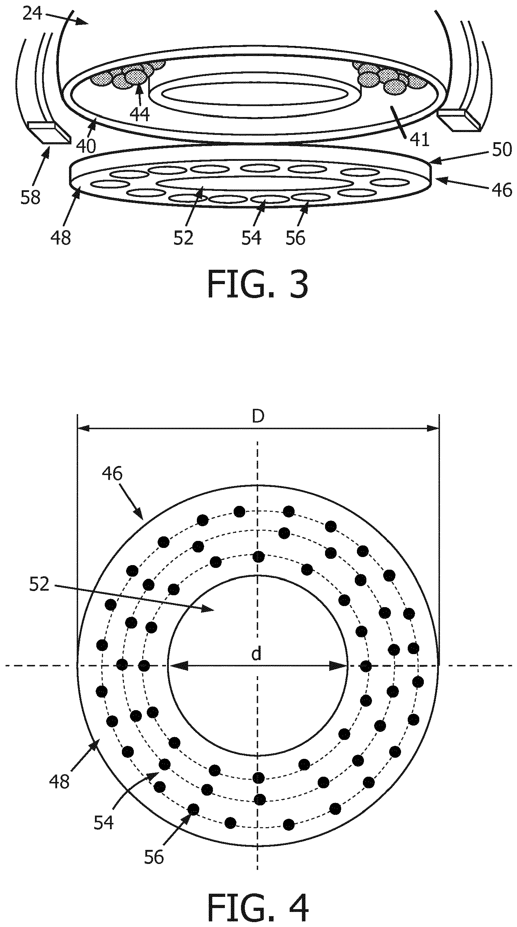

As illustrated in FIGURE 3, the material **44** may be particulate in nature and is retained in the trough **41** by a foraminous filter member **46.** The filter member may be formed of metal, e.g., at least 50% of a metal, metal alloy, or combination of metals. The filter member may include a perforated plate and/or perforated collar located adjacent the proximal end of the housing to allow liquid to pass from the crevice into the receptacle. In the embodiments of FIGURES 2-4, the filter member **46** is in the shape of a plate with first and second surfaces **48, 50** and a central aperture **52.** The diameter ***d*** of the aperture may be at least 30% or at least 50% of the outer diameter ***D*** of the filter member. A plurality of holes **54, 56,** etc., pass through the disk from the first surface **48** to the second surface **50.** There may be at least 5, or at least 10, or at least 20, or at least 40, or at least 50, or at least 100, or more holes. A retaining member **58** (FIG. 2) holds the disk **46** in place to close the opening **42** of the trough **41,** permitting ingress and egress of liquid in the mixture **36** to/from the trough through the holes. The holes **54, 56,** etc., are sized to permit water and dissolved nutrients to enter the trough **41** and contact the particulate material **44** while inhibiting or preventing the material **44** from leaving the trough. The size of the holes **54, 56** may be selected based on the size of the particles of the material, e.g., up to 75% of the average minimum width of the particles. In some embodiments, it may be assumed that the particles are spherical, in which case, the average minimum width is the average particle diameter. As an example, the holes are 100 µm-300 µm in diameter.

The holes **54, 56,** etc., may be arranged regularly on the perforated filter member **46,** e.g., equally spaced on an imaginary ring or a plurality of concentric rings, as illustrated in FIGURE 4. Alternatively, they may be arranged relatively randomly.

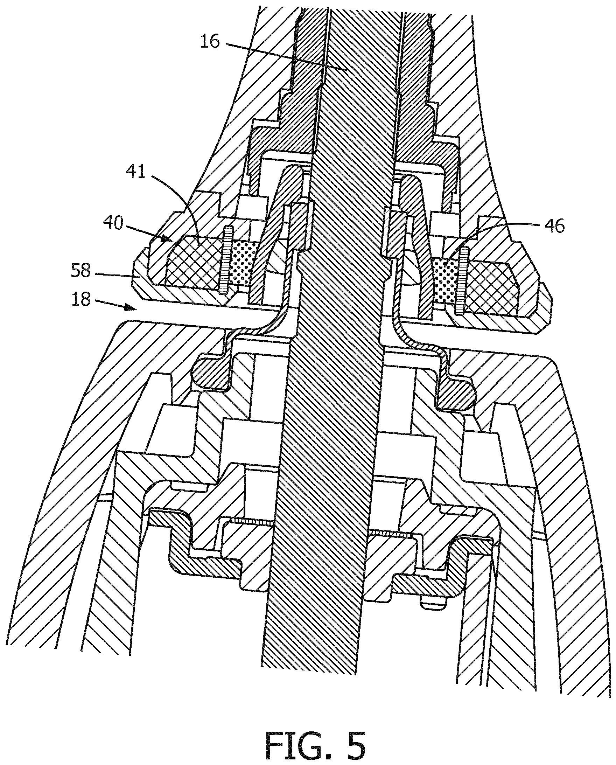

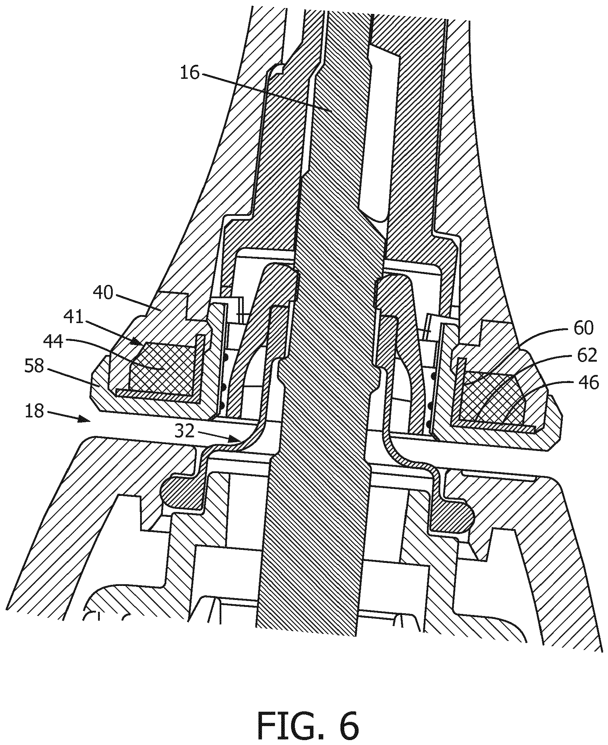

In the embodiment of FIGURES 1-4, the first surface **48** defines a part of the proximal end **28** of the brush head, and the holes **54, 56,** etc. are thus at the bottom of the brush head, in normal use. In another embodiment, illustrated in FIGURE 5, where similar elements are accorded the same numerals, the perforated filter member **46** may extend laterally from the trough **41,** and define radial holes which are in fluid communication with the crevice **18.** In yet another embodiment, as illustrated in FIGURE 6, the perforated member **46** may define both radial and bottom holes. In this embodiment, the perforated member includes a collar **60,** which surrounds the drive shaft **16,** and a plate **62,** which extends radially from a lower end of the collar **60.** In each of the embodiments, the particulate material does not come out of the brush head while the water can get into the particulate material.

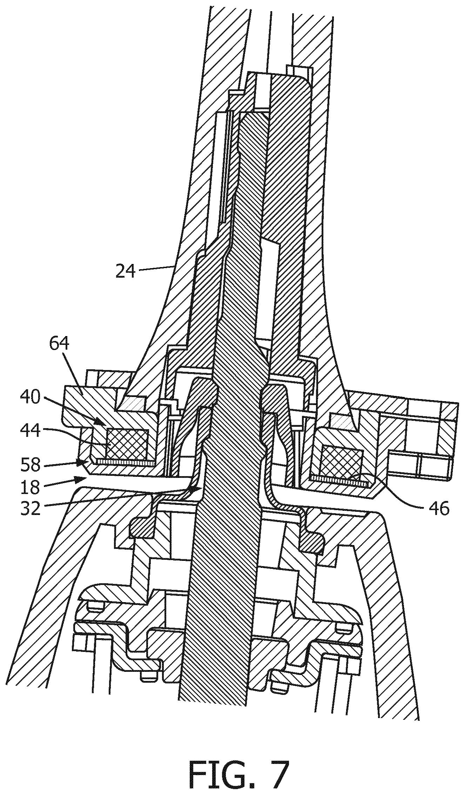

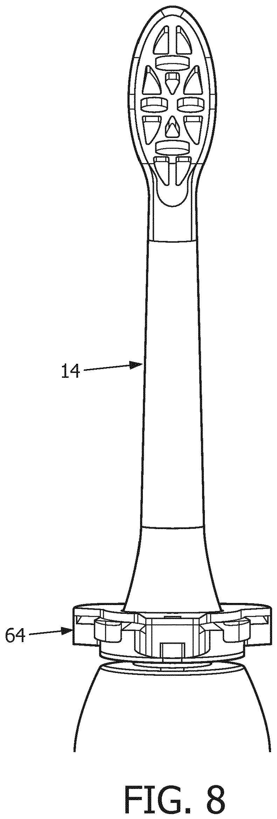

FIGURES 7 and 8 show another embodiment, in which the receptacle **40** holding the material **44,** the perforated filter member **46,** and the retaining member **58** are all part of a removable adapter **64.** This arrangement allows the material **44** to be replaced by replacing the adapter **64** on the brush head **14.** This may facilitate a more frequent change of material **44** than may readily be the case where the brush head housing **24,** trough **41,** perforated member **46,** and material **44** are combined as a single replaceable unit.

The material **44** contains, absorbs or otherwise captures a microbial growth-limiting nutrient present in the liquid mixture **36.** In one embodiment, the growth-limiting nutrient includes phosphorus, e.g., in the form of phosphate. In another embodiment, the growth-limiting nutrient includes nitrogen, e.g., in the form of nitrate.

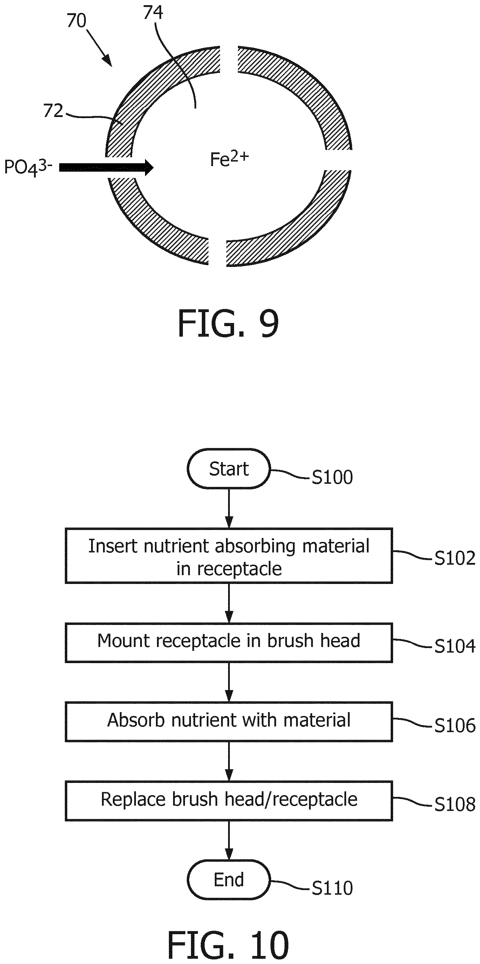

An example material **44** suited to removal of phosphorus-containing nutrients, such as phosphates, is based on ferritin. In one embodiment, illustrated in FIGURE 9, the particles **70** of material **44** may include a shell **72** of ferritin protein which is porous to the nutrient-containing liquid. The shell surrounds a core **74** containing iron ions, e.g., in the form of a ferrihydrite-like material which forms crystallites with the phosphate ions. Each ferritin particle **70** may store about 4500 iron ions. Other metal ions which react with phosphate ions to form a water-insoluble precipitate may be used in place of iron ions. Examples include metals ions other than Alkali metal (Group IA) cations, such as calcium ions.

Ferritin-based materials have a large capacity for absorbing phosphate ions and thus a relatively small amount of the material **44** (e.g., at least 0.01 g, or at least 0.05 g, or at least 0.1 g, or at least 0.5 g, up to 2 g, or up to 1 g) is sufficient to inhibit growth of mold in the crevice **18** for extended periods, such as from 3-6 months or more. Suitable ferritin-based, phosphate absorbing materials **44** are described in U.S. 20080223789 and are available in powder form from BiAqua under the tradename PRT. This material is capable of lowering the concentration of phosphate in the water to below 5 ppb, or below 1 ppb.

As described in U.S. 20080223789, hyperthermophilic ferritin can be produced as follows. The putative ferritin gene from *Pyrococcus furiosus* cells is amplified by PCR, using oligonucleotides 5'-CCATATGTTGAGCGAAAGAATGC-S' as the forward primer and 5'-GTCGACT-TACTCCTCCCTG-3' as the reverse primer. The gene is then cloned into pCR 2.1-TOPO shuttle vector (Invitrogen) and transformed into competent E. coli DH5α cells for further amplification. The chimeric vector is then isolated from the cells and sequenced to check the fidelity of the clone. The ferritin gene is then separated by Ndel and Sall (Roche) restriction digestion and recloned into expression vector pET24a (+) (Novagen). The resulting clone is then transformed into the competent BL21-CodonPlus (DE3)-RIL cells (Stratagene). A single colony of the recombinant E. coli strain is inoculated in LB (Sambrook, et al., 1989) media containing 50 mg/ml of chloramphenicol and 20 mg/ ml of kanamycin and cultivated overnight aerobically at 310 K and 200 rev./min. This pre-culture is transformed in TB medium (Sambrook, et al., 1989) in a 1:20 ratio and grown for 2 h (until it reaches the O.D.₆₀₀ value of 0.5 or higher) and induced with 1 mM IPTG. Cells were then harvested by centrifugation after an additional 5 h of growth. The cell pellet is washed and re-dissolved in 20 mM Tris-HCl buffer, pH 8. DNase and RNase are added to the solution in order to degrade the genetic elements and 0.5 mM PMSF is added to protect any protein degradation by internal protease activity. The cell suspension is then applied to a Cell Disruptor (Constant Systems) to break the cells. The cell-free extract is subjected to heat treatment (373 K, 30 min) and clarified by centrifugation. The resultant supernatant is concentrated over Amicon, YM-100, to give the final preparation of the protein.

It can be appreciated that for removing nitrates as essential nutrients, other materials **44** can be used, such as ion-exchange resins, such as the selective ion exchange method as disclosed for example, in U.S. Pat. No. 4,479,877 to Guter and an oxidation-reduction scheme disclosed in U.S. Pat. No. 5,069,800 to Murphy.

During teeth brushing, the crevice **18** between the brush head, seal and shaft may become filled with aqueous liquid **36,** which may be mostly water (e.g., at least 60 wt. %, or at least 80 wt. % water). The phosphate in the water is absorbed, inhibiting or preventing mold growth until the material **44** is fully loaded. The phosphate may be present in the water at a concentration of at least 10 ppb, or at least 50 ppb, or at least 100 ppb, or at least 1000 ppb.

The material **44** may have a phosphate absorption capacity of at least 1 or at least 2 or at least 4 or up to 20, or up to 10, or about 6 g / kg of material and a density of about 0.5 kg/L.

The particle size of the material **44,** as measured using standard sieves may be at least 100 µm, or at least 200 µm, or up to 500 µm, such as from 300-420 µm. Particles in the range of 300-420 µm may be obtained, for example, using a 0.420 mm sieve (ASTM mesh No. 40) to remove the larger particles and then a 0.297 mm sieve (ASTM mesh No. 50) to filter out the smaller fragments and retain those in the desired size range. A narrower range could be obtained using a combination of 0.354 mm and 0.297 mm sieves or a combination of 0.297 mm and 0.250 mm sieves, for example.

The crevice **18** between the brush head and the handle may have a volume of about 1 mL. It may be assumed that the crevice is, for at least a part of the time, partially or completely filled with liquid (saliva, toothpaste and tap water). Thus, during at least a part of the time between uses, the crevice is filled in such a way that the phosphate can transport freely across the perforated member due to diffusion. Some toothpastes contain high phosphate levels, for example, the phosphate concentration in the liquid **36** may be up to about 3 mg / L. In order to remove all or substantially all of the phosphate between uses, e.g., at least 95 wt. % or at least 99 wt. %, or at least 99.9 wt. % (growth is inhibited with phosphate concentrations below 5 ppb), the material is capable of removing 3 µg / turn (i.e., between brushings). Assuming a brush head lifetime of 100 days (3 months) and two uses a day, this suggests that about 600 µg phosphate in total may need to removed, which may be achieved with about 0.1 g or 0.2 mL of ferritin-based powder, such as the BiAqua powder. This amount of powder is readily stored in the receptacle **40.**

FIGURE 10 illustrates a method of inhibiting microorganism growth by removal of essential nutrients, such as phosphate. The method begins at S100. At S102, nutrient absorbing material **44** is loaded into a receptacle **40.** At S104, the receptacle is mounted on a brush head **14** (or this may take place prior to loading the receptacle with the material). At S106, liquid **36** entering the crevice **18** is in contact with the material **44** and the material removes essential nutrient(s) from the liquid. At S108, fresh nutrient absorbing material **44** is provided. This may be achieved by replacing the brush head **14,** the adapter **64,** and/or the receptacle **40.** The method ends at S110.

Each of the documents referred to above is incorporated herein by reference.

Except where otherwise explicitly indicated, all numerical quantities in this description specifying amounts of materials, reaction conditions, molecular weights, number of carbon atoms, and the like, are to be understood as modified by the word "about." Unless otherwise indicated, each chemical or composition referred to herein should be interpreted as being a commercial grade material which may contain the isomers, by-products, derivatives, and other such materials which are normally understood to be present in the commercial grade. It is to be understood that the upper and lower amount, range, and ratio limits set forth herein may be independently combined. Similarly, the ranges and amounts for each element of the invention may be used together with ranges or amounts for any of the other elements. As used herein any member of a genus (or list) may be excluded from the claims.

The invention has been described with reference to the preferred embodiments. Obviously, modifications and alterations will occur to others upon reading and understanding the preceding detailed description. It is intended that the invention be construed as including all such modifications and alterations insofar as they come within the scope of the appended claims or the equivalents thereof.

## Claims

1. A brush head **(14)** for a toothbrush comprising:
a housing **(24)** which defines an interior cavity **(26);**
a brush member **(22)** at a distal end **(23)** of the housing; and
a receptacle **(40)** at a proximal end **(28)** of the housing which holds a material **(44)** that removes an essential nutrient for growth of mold from liquid **(36)** when the liquid is in contact with the receptacle, wherein the receptacle includes a filter member (46) which retains the material in the receptacle and allows the liquid to enter the receptacle.

2. The brush head of claim 2, wherein the filter member includes a perforated plate **(62)** located adjacent the proximal end of the housing.

3. The brush head of claim 3, wherein the perforated plate includes a plurality of holes **(54, 56).**

4. The brush head of any preceding claim, wherein the receptacle is removably mounted to the handle.

5. The brush head of any preceding claim, wherein the material is in the form of particles **(70).**

6. The brush head of any preceding claim, wherein the material includes ferritin.

7. The brush head of claim 7, wherein the material includes a shell **(72)** comprising ferritin and a core **(74)** comprising iron ions.

8. A toothbrush **(10)** comprising the brush head of any preceding claim and a handle **(12).**

9. The toothbrush of claim 9, wherein the receptacle is in fluid communication with a crevice **(18)** located between the handle and the brush head, the liquid entering the crevice during teeth cleaning.

10. The toothbrush of claim 10, wherein a seal **(18)** within the crevice extends between the handle and the brush head.

11. A method for removing an essential nutrient for growth of mold from a crevice comprising providing a toothbrush with the brush head of any one of claims 1-11 and cleaning teeth with the toothbrush.

12. The method of claim 12, wherein the essential nutrient is phosphate.

## Patentansprüche

1. Bürstenkopf (14) für eine Zahnbürste, umfassend:
ein Gehäuse (24), das einen Innenraum (26) definiert;
ein Bürstenelement (22) an einem fernen Ende (23) des Gehäuses; und
einen Behälter (40) an einem nahen Ende (28) des Gehäuses, der ein Material (44) hält, das ein essentielles Nahrungsmittel für Schimmelwachstum aus Flüssigkeit (36) entfernt, wenn die Flüssigkeit in Kontakt mit dem Behälter ist, wobei der Behälter ein Filterelement (46) enthält, das das Material im Behälter zurückhält und Flüssigkeit in den Behälter eintreten lässt.

2. Bürstenkopf nach Anspruch 2, wobei das Filterelement eine perforierte Platte (62) enthält, die neben dem proximalen Ende des Gehäuses gelegen ist.

3. Bürstenkopf nach Anspruch 3, wobei die perforierte Platte eine Vielzahl von Löchern (54, 56) enthält.

4. Bürstenkopf nach einem der vorstehenden Ansprüche, wobei der Behälter entfernbar am Griff befestigt ist.

5. Bürstenkopf nach einem der vorstehenden Ansprüche, wobei das Material die Form von Partikeln (70) aufweist.

6. Bürstenkopf nach einem der vorstehenden Ansprüche, wobei das Material Ferritin enthält.

7. Bürstenkopf nach Anspruch 7, wobei das Material eine Hülle (72), die Ferritin umfasst, und einen Kern (74), der Eisenionen umfasst, enthält.

8. Zahnbürste (10), umfassend den Bürstenkopf nach einem der vorstehenden Ansprüche und einen Griff (12).

9. Zahnbürste nach Anspruch 9, wobei der Benutzer mit einem Spalt (18) in strömungstechnischer Verbindung steht, der zwischen dem Griff und dem Bürstenkopf gelegen ist, wobei die Flüssigkeit während des Zähneputzens in den Spalt eindringt.

10. Zahnbürste nach Anspruch 10, wobei sich eine Dichtung (18) innerhalb des Spalts zwischen dem Griff und dem Bürstenkopf erstreckt.

11. Verfahren zum Entfernen eines essentiellen Nahrungsmittels für Schimmelwachstum aus einem Spalt, umfassend ein Bereitstellen einer Zahnbürste mit dem Bürstenkopf nach einem der Ansprüche 1-11 und zum Zähneputzen mit der Zahnbürste.

12. Verfahren nach Anspruch 12, wobei das essentielle Nahrungsmittel Phosphat ist.

## Revendications

1. Tête de brosse (14) pour une brosse à dents comprenant :
un boîtier (24) qui définit une cavité intérieure (26) ;
un élément brosse (22) au niveau d'une extrémité distale (23) du boîtier ; et
un réceptacle (40) au niveau d'une extrémité proximale (28) du boîtier qui contient un matériau (44) qui élimine un nutriment essentiel à la croissance de moisissure à partir du liquide (36) lorsque le liquide est en contact avec le réceptacle, le réceptacle comprenant un élément filtre (46) qui retient le matériau dans le réceptacle et permet au liquide d'entrer dans le réceptacle.

2. Tête de brosse selon la revendication 2, dans laquelle l'élément filtre comprend une plaque perforée (62) adjacente à l'extrémité proximale du boîtier.

3. Tête de brosse selon la revendication 3, dans laquelle la plaque perforée comprend une pluralité de trous (54, 56).

4. Tête de brosse selon l'une quelconque des revendications précédentes, dans laquelle le réceptacle est monté de manière amovible sur le manche.

5. Tête de brosse selon l'une quelconque des revendications précédentes, dans laquelle le matériau est sous la forme de particules (70).

6. Tête de brosse selon l'une quelconque des revendications précédentes, dans laquelle le matériau comprend de la ferritine.

7. Tête de brosse selon la revendication 7, dans laquelle le matériau comprend une enveloppe (72) comprenant de la ferritine et un noyau (74) comprenant des ions fer.

8. Brosse à dents (10) comprenant la tête de brosse selon l'une quelconque des revendications précédentes et un manche (12).

9. Brosse à dents selon la revendication 9, dans laquelle le réceptacle est en communication de fluide avec une fente (18) située entre le manche et la tête de brosse, le liquide pénétrant dans la fente pendant le nettoyage des dents.

10. Brosse à dents selon la revendication 10, dans laquelle un joint d'étanchéité (18) à l'intérieur de la fente s'étend entre le manche et la tête de brosse.

11. Procédé pour éliminer un nutriment essentiel pour la croissance de moisissure à partir d'une fente comprenant l'étape consistant à fournir une brosse à dents avec la tête de brosse selon l'une quelconque des revendications 1 à 11 et à nettoyer les dents avec la brosse à dents.

12. Procédé selon la revendication 12, dans lequel le nutriment essentiel est le phosphate.
